# EUROPÄISCHE PATENTSCHRIFT

(11) **EP 3 200 947 B1**
(45) Veröffentlichungstag und Bekanntmachung des Hinweises auf die Patenterteilung: **03.07.2019**
(21) Anmeldenummer: 16766910.0
(22) Anmeldetag: 13.09.2016
(51) Int. Cl.: B23D 75/00, B23B 41/12, B23D 77/00, B23B 39/20

(54) **VERFAHREN ZUR FERTIGBEARBEITUNG VON LAGERBOHRUNGEN IN EINEM WERKSTÜCK**
METHOD FOR FINISHING BEARING BORES IN A WORKPIECE
PROCÉDÉ DE FINITION D'ALÉSAGE DE PALIERS DANS UNE PIÈCE

(30) Priorität: 14.09.2015 DE 102015012078
(43) Veröffentlichungstag der Anmeldung: 09.08.2017
(60) Teilanmeldung: 18196584.9
(73) Patentinhaber: Licon mt GmbH & Co. KG, 88471 Laupheim (DE)
(72) Erfinder: BENZ, Winfried, 89165 Dietenheim (DE)
(74) Vertreter: Rau, Schneck & Hübner Patentanwälte Rechtsanwälte PartGmbB
(86) Internationale Anmeldenummer: PCT/EP2016/071536
(87) Internationale Veröffentlichungsnummer: WO 2017/046075

(56) Entgegenhaltungen:
- EP-A1- 0 740 978
- EP-A1- 1 036 620
- DE-A1- 1 949 947
- DE-B- 1 047 573
- JP-A- H09 131 606
- JP-A- 2002 283 114
- JP-A- 2011 194 541
- US-A- 4 701 081

## Beschreibung

Die Erfindung betrifft ein Verfahren zur Fertigbearbeitung durch Reiben von mehreren koaxial hintereinander angeordneten und voneinander beabstandeten Lagerbohrungen nach dem Oberbegriff des Anspruches 1. Ein Beispiel für ein solches Verfahren zeigt die JP 2011-194 541 A. Außerdem ist eine Werkzeugmaschine zur Durchführung des Verfahrens aus der JP 2011-194 541 A bekannt. Hiermit werden sogenannte Lagergassen, das heißt koaxial zueinander gleichsam in einer Reihe angeordnete Lagerbohrungen, die zur Aufnahme von mehrfach gelagerten Wellen, wie Nockenwellen, in Zylinderköpfen oder Zylinderkopfhauben dienen, durch Reiben fertig bearbeitet. Hierbei wird eine erste Lagerbohrung mittels einer ersten, kurzen Reibahle, einer sogenannten Pilot-Reibahle, auf Fertigmaß aufgerieben. Anschließend erfolgt das Aufreiben der nachfolgenden Lagerbohrungen mittels einer längeren Haupt-Reibahle, wobei die erste bereits mit der Pilot-Reibahle aufgeriebene Lagerbohrung gleichzeitig als Stützlager für die Haupt-Reibahle dient. Die Reibahle und entsprechend die fertig zu bearbeitenden Lagergassen im Werkstück sind horizontal angeordnet. Die jeweils eine Reibahle aufnehmenden Spindeln werden mit einem Werkzeug-Antrieb nacheinander in Eingriff gebracht. In der Praxis hat sich gezeigt, dass die geforderte extreme Bearbeitungsgenauigkeit hinsichtlich Durchmesser der aufgeriebenen Lagerbohrungen und hinsichtlich ihres Fluchtens nicht zuverlässig eingehalten werden kann.

Aus der WO 2005/107 984 A1 ist eine Werkzeugmaschine bekannt, bei der im Werkzeugrevolver Maßnahmen zur Optimierung einer Minimalmengenschmierung vorgesehen sind, die insbesondere für das Fräsen und Bohren von Bedeutung sind.

Aus der DE 1 949 947 A1 ist ein Revolverschieber an einer Werkzeugmaschine bekannt, an dem ein Revolverkopf schwenk- und festspannbar angebracht ist, der mit mindestens einer Bohr- und Frässpindel ausgestattet ist, die sich jeweils senkrecht zur Schwenkachse des Revolverkopfes erstreckend darin drehbar gelagert ist. Ein Werkzeug-Spanntisch ist unterhalb des Revolverkopfes angeordnet, wobei die das jeweils im Einsatz befindliche Werkzeug aufnehmende Spindel senkrecht nach unten gerichtet ist.

Aus der EP 0 740 978 A1 ist eine Werkzeugmaschine zur Bearbeitung von stabförmigen Werkstücken bekannt. Diese weist einen in drei Achsen verfahrbaren Bearbeitungskopf mit mehreren auf einem Kreisumfang angeordneten Bearbeitungswerkzeugen auf, die jeweils zur Bearbeitung unterschiedlicher Bohrungen in unterschiedlichen Richtungen von oben oder von der Seite des Werkstücks einsetzbar sind. Eine Fertigbearbeitung durch Reiben von sogenannten Lagergassen ist hiermit nicht möglich und auch nicht vorgesehen.

Aus der JP 9-131 606 A ist eine Werkzeugmaschine bekannt mit einem in drei Achsen verfahrbaren Bearbeitungskopf mit einer Spindel. Die Maschine weist einen Werkzeugwechsler auf, mittels dessen in die AntriebsSpindel unterschiedliche Werkzeuge einsetzbar sind. Hiermit können Bohrungen in unterschiedlichen Koordinatenrichtungen hergestellt werden.

Der Erfindung liegt die Aufgabe zu Grunde, ein Verfahren der gattungsgemäßen Art so weiterzubilden, dass die Genauigkeit hinsichtlich Durchmesser und Koaxialität der Lagerbohrungen verbessert wird.

Diese Aufgabe wird bei einem Verfahren der gattungsgemäßen Art erfindungsgemäß durch die Merkmale im Kennzeichnungsteil des Anspruches 1 gelöst. Mittels der in einem Werkzeug-Revolver ständig eingespannten ersten Reibahle wird mindestens eine erste, dem Werkzeug-Revolver benachbarte Lagerbohrung auf den End-Durchmesser D aufgerieben. Anschließend wird mit der gegenüber der ersten Reibahle längeren, ebenfalls ständig in dem Werkzeug-Revolver eingespannten zweiten Reibahle die mindestens eine weitere Lagerbohrung auf den End-Durchmesser D aufgerieben, wobei die zweite Reibahle in der mindestens einen bereits auf End-Durchmesser D aufgeriebenen Lagerbohrung zusätzlich zur Lagerung im Werkzeug-Revolver radial gelagert ist. Beide Reibahlen werden während der Fertigbearbeitung hängend eingesetzt.

Besonders wichtig für den angestrebten erfinderischen Erfolg ist die hängende Anordnung der beiden zur Fertigbearbeitung eingesetzten Reibahlen. Durch deren hängende Anordnung während der Bearbeitung treten Ungenauigkeiten aufgrund einer Durchbiegung insbesondere der Haupt-Reibahle nicht auf. Weiterhin treten keine Ungenauigkeiten dadurch auf, dass die Werkzeuge unrund laufen, d.h. in ihrer geometrischen Achse von der Drehachse abweichen oder dass die Pilot-Reibahle und die Haupt-Reibahle nicht exakt koaxial zueinander eingesetzt werden. Erstere Nachteile können bei den üblichen Werkzeugwechslern auftreten, wo gespannte Werkzeuge aufgrund von Spannfehlern einen Rundlauffehler aufweisen können. Fehler im bearbeiteten Durchmesser sind die Folge. Bei Mehrspindel- Bohrköpfen mit zueinander parallelen Spindeln, in die die Werkzeuge konstant eingespannt sind, also nicht gewechselt werden und damit ohne Rundlauffehler eingesetzt werden können, ergeben sich Ungenauigkeiten in der Koaxialität beider Werkzeuge aufgrund der temperaturbedingten Abstandsänderungen der einzelnen Spindeln zueinander. Beim erfindungsgemäß ausgewählten Werkzeug-Revolver sind die Pilot-Reibahle und die Haupt-Reibahle ständig in den entsprechenden Spindeln eingespannt. Es erfolgt kein Werkzeugwechsel. Beim erfindungsgemäß ausgewählten Werkzeug-Revolver ändert sich die Lage der Spindeln zueinander unter Temperatureinfluss nicht.

Wenn bei dem erfindungsgemäßen Verfahren jeweils die eine im Reib-Einsatz befindliche Reibahle aufnehmende Spindel gegenüber der Vertikalen um 5 bis 10° geneigt ist, dann hat dies den Vorteil, dass eine geringfügige einseitige Abstützung der Haupt-Reibahle in der zuvor auf Fertigmaß aufgeriebenen Lagerbohrung erfolgt, ohne dass die Reibahle eine Orientierung hätte, in der eine Durchbiegung erfolgen könnte. Durch diese leichte Schräganordnung tritt ein äußerst geringer Durchhang der Reibahle, und zwar insbesondere der Haupt-Reibahle ein, wobei dieser Durchhang gerade so groß ist, dass die Schneide beim Herausziehen der Haupt-Reibahle aus dem Werkstück nach der Fertigbearbeitung nicht mit der Wand der Lagerbohrung in Berührung kommt. Hierzu wird selbstverständlich die Reibahle so gedreht, dass beim Herausziehen der Reibahle aus dem Werkstück die Schneide sich gleichsam an der Oberseite der Reibahle befindet.

Weitere Merkmale, Vorteile und Einzelheiten der Erfindung ergeben sich aus den Unteransprüchen und aus der nachfolgenden Beschreibung von Ausführungsbeispielen anhand der Zeichnung. Es zeigt:
- Fig. 1: eine Werkzeugmaschine zur Ausübung des Verfahrens nach der Erfindung in perspektivischer Darstellung,
- Fig. 2: die Werkzeugmaschine nach Fig. 1 in einer Draufsicht,
- Fig. 3: einen Werkzeug-Revolver der Werkzeugmaschine,
- Fig. 4: die Bearbeitung von Lagerbohrungen eines aufgebrochen dargestellten Werkstücks mittels einer Pilot-Reibahle,
- Fig. 5: die End-Bearbeitung der Lagerbohrungen mittels einer Fer-tig-Reibahle,
- Fig. 6: eine Teildarstellung einer Reibahle beim Einsatz in einem Werkstück und
- Fig. 7: eine gegenüber den Fig. 4 und 5 geänderte hängende Anordnung der Reibahlen.

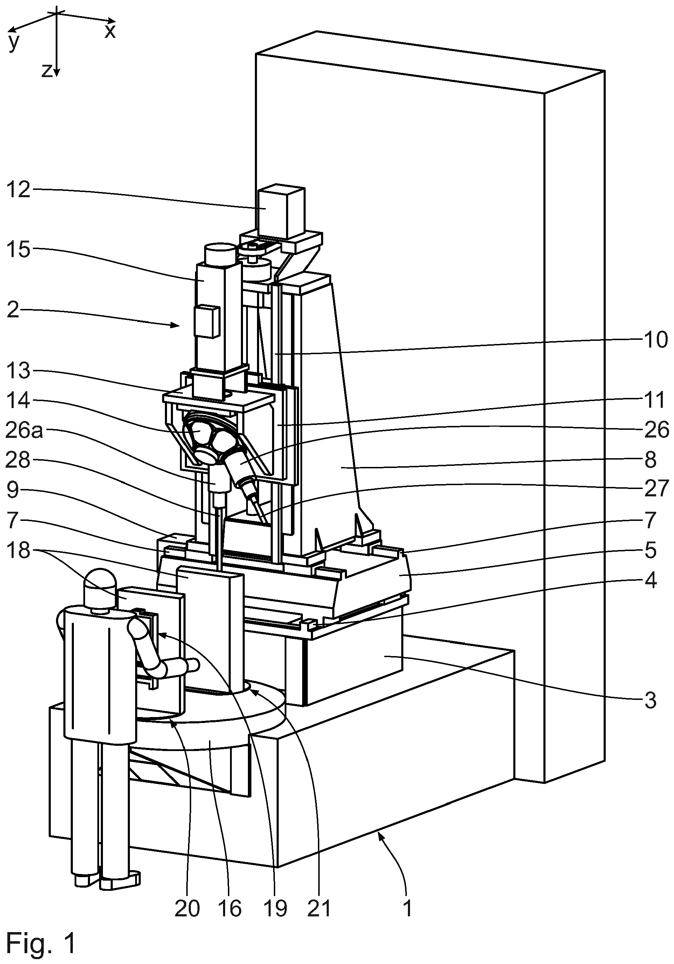

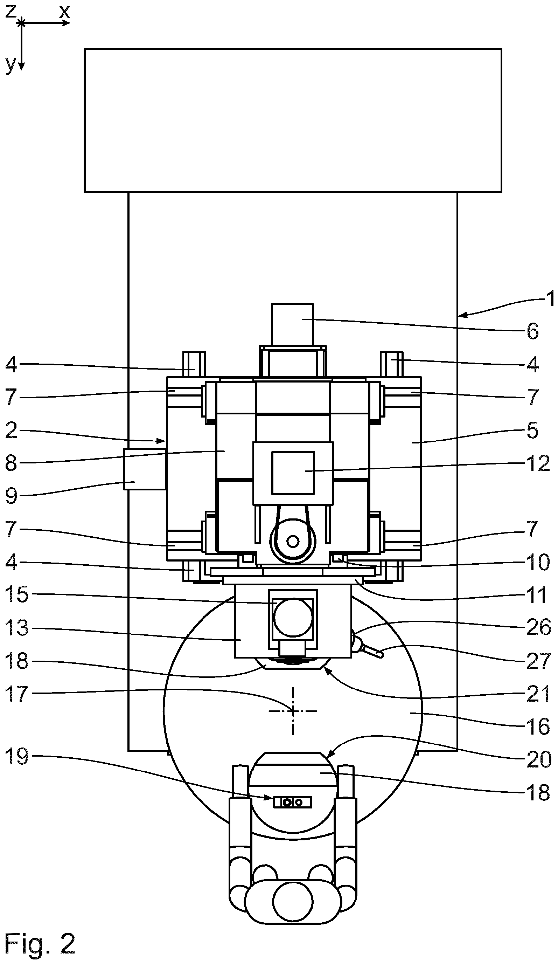

Wie den Fig. 1 und 2 entnehmbar ist, weist eine Werkzeugmaschine zur Durchführung des erfindungsgemäßen Verfahrens ein Maschinen-Gestell 1 auf, auf dem eine Bearbeitungs-Einheit 2 für Werkstücke angebracht ist. Diese Bearbeitungs-Einheit 2 weist eine fest auf dem Maschinen-Gestell 1 angebrachte Abstützung 3 mit auf ihr angeordneten y-Führungs-Schienen 4 auf. Auf den y-Führungs-Schienen 4 ist ein y-Schlitten 5 in y-Richtung, also horizontal, verschiebbar gelagert, der mittels eines y-Antriebs-Motors 6 antreibbar ist. Auf dem y-Schlitten 5 sind wiederum x-Führungs-Schienen 7 angebracht, auf denen ein x-Schlitten 8 mittels eines x-Antriebs-Motors 9 in x-Richtung, also ebenfalls horizontal, verschiebbar gelagert ist. An der Vorderseite des x-Schlittens 8 sind wiederum z-Führungs-Schienen 10 angebracht, auf denen ein z-Schlitten 11 mittels eines z-Antriebs-Motors 12 in z-Richtung, also
vertikal, verfahrbar angebracht ist. An dem z-Schlitten 11 ist ein Bearbeitungskopf 13 angebracht, an dem wiederum ein Werkzeug-Revolver 14 befestigt ist, der mittels eines auf dem Bearbeitungskopf 13 angebrachten Werkzeug-Antriebs 15 antreibbar ist. Es handelt sich also um eine 3-achsige Bearbeitungs-Einheit 2.

In y-Richtung vor und in z-Richtung unterhalb der Bearbeitungs-Einheit 2 ist ein Werkstück-Spanntisch 16 auf dem Maschinen-Gestell 1 abgestützt, der um eine vertikale Achse 17 drehantreibbar ist. Auf dem Werkstück-Spanntisch 16 sind zwei Werkstück-Spann-Einrichtungen 18 angebracht, auf denen zu bearbeitende Werkstücke 19 aufgespannt und aus einer Werkstück-Aufspann- und -Entnahme-Position 20 in eine Werkstück-Bearbeitungs-Position 21 vor und unter der Bearbeitungs-Einheit 2 verbracht werden können, von wo sie nach dem Bearbeiten zurück gefördert werden.

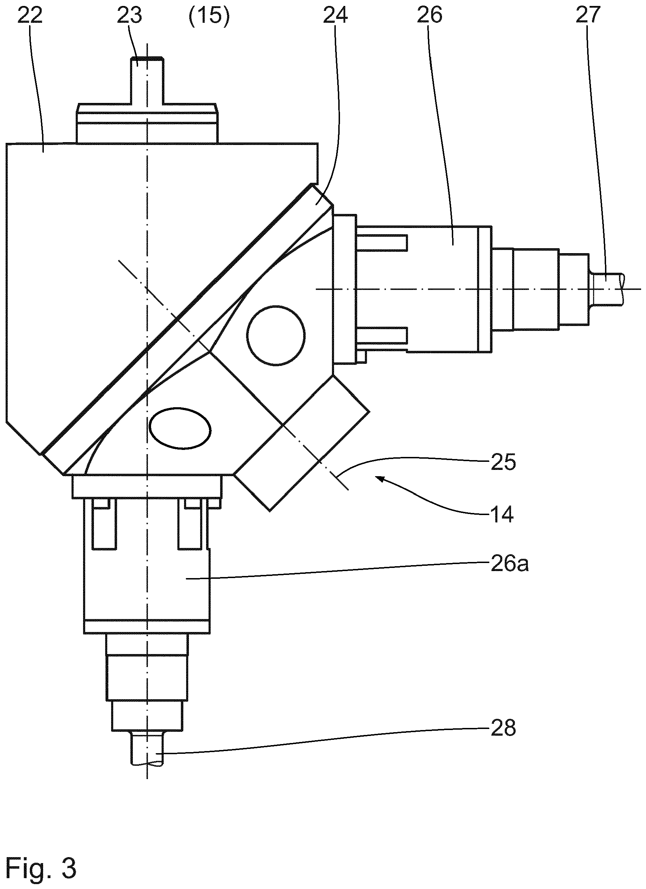

Der in Fig. 3 dargestellte Werkzeug-Revolver 14 ist in der Technik allgemein bekannt, beispielsweise aus der WO 2005/107984 A1. Er weist einen Grundkörper 22 auf, der am Bearbeitungskopf 13 angebracht ist. Im Grundkörper 22 ist eine vertikale Antriebs-Welle 23 gelagert, die mit dem Werkzeug-Antrieb 15 verbunden ist. Im Grundkörper 22 ist weiterhin ein Drehteller 24 um eine Drehteller-Achse 25 schwenkbar. Außerdem ist der Drehteller 24 mit dem Grundkörper 22 fest und positionsgenau verriegelbar und aus dieser Verriegelung lösbar.

Am Drehteller 24 sind - im vorliegenden Fall zwei - Spindeln 26, 26a mit Werkzeug-Spann-Einrichtungen gelagert, von denen jeweils eine mit der vertikalen Antriebs-Welle 23 in Antriebsverbindung bringbar ist. Nach einer Lösung der erwähnten Verriegelung zwischen Drehteller 24 und Grundkörper 22 und durch entsprechendes Verschwenken des Drehtellers 24 mit den beiden Spindeln 26, 26a um die Drehteller-Achse 25 ist die eine oder andere Spindel 26, 26a mit der Antriebs-Welle 23 in Eingriff bringbar. Die beiden Spindeln 26, 26a nehmen jeweils ein Werkzeug 27 bzw. 28 auf, wobei es sich bei dem Werkzeug 27 um eine Pilot-Reibahle und bei dem Werkzeug 28 um eine Fertig-Reibahle, beziehungsweise eine Haupt-Reibahle, handelt. Die Reibahlen sind ständig in den entsprechenden Spindeln 26, 26a eingespannt, bis sie aufgrund von Verschleiß ausgewechselt werden müssen. Das jeweils im Einsatz befindliche Werkzeug 27 oder 28 ist das hängende Werkzeug, also das in z-Richtung angeordnete Werkzeug. Entsprechend ist die das im Einsatz befindliche Werkzeug 27, 28 aufnehmende Spindel 26, 26a vertikal angeordnet.

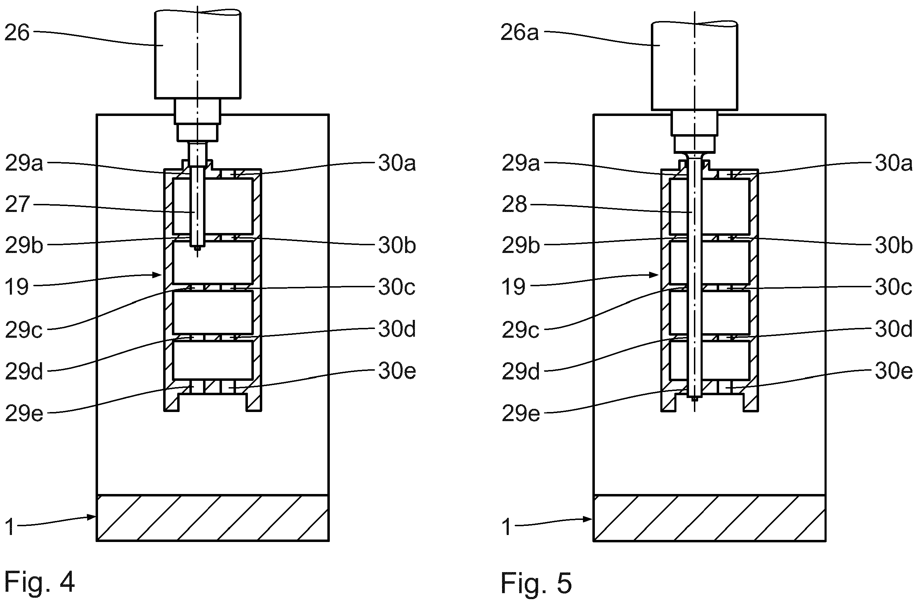

Bei den zu bearbeitenden Werkstücken 19 handelt es sich im vorliegenden Fall um Zylinderköpfe oder Zylinderkopfhauben für Verbrennungsmotoren. In dem entsprechenden Werkstück 19 sind miteinander fluchtende Lagerbohrungen 29a, 29b, 29c, 29d und 29e auf ihr exaktes Endmaß mittels Reiben aufzuweiten. Wie Fig. 4 entnehmbar ist, erfolgt zuerst ein Aufreiben, also die Endbearbeitung der beiden oberen Lagerbohrungen 29a und 29b mittels des Werkzeugs 27, nämlich der Pilot-Reibahle. Anschließend erfolgt das Aufreiben, also die Endbearbeitung, der nachgeordneten Lagerbohrungen 29c, 29d und 29e mittels des Werkzeugs 28, also der Fertig-Reibahle, wie Fig. 5 entnehmbar ist. Die benachbarte Reihe von Lagerbohrungen 30a, 30b, 30c, 30d und 30e wird in der gleichen Reihenfolge auf Endmaß gerieben. Die beiden bereits auf ihr Endmaß geriebenen Lagerbohrungen 29a, 29b oder zumindest die Lagerbohrung 29b dienen der Haupt-Reibahle 28 als Stützlager. Die Haupt-Reibahle 28 ist also zweifach gelagert, nämlich in der Lagerbohrung 29b und in der Spindel 26a. Die Werkzeuge 27, 28 sind bei diesem Bearbeitungsgang - entsprechend der Konstruktion der Werkzeugmaschine - exakt vertikal hängend, angeordnet, wobei - wie erwähnt - die Bearbeitung von oben nach unten im Werkstück 19 erfolgt.

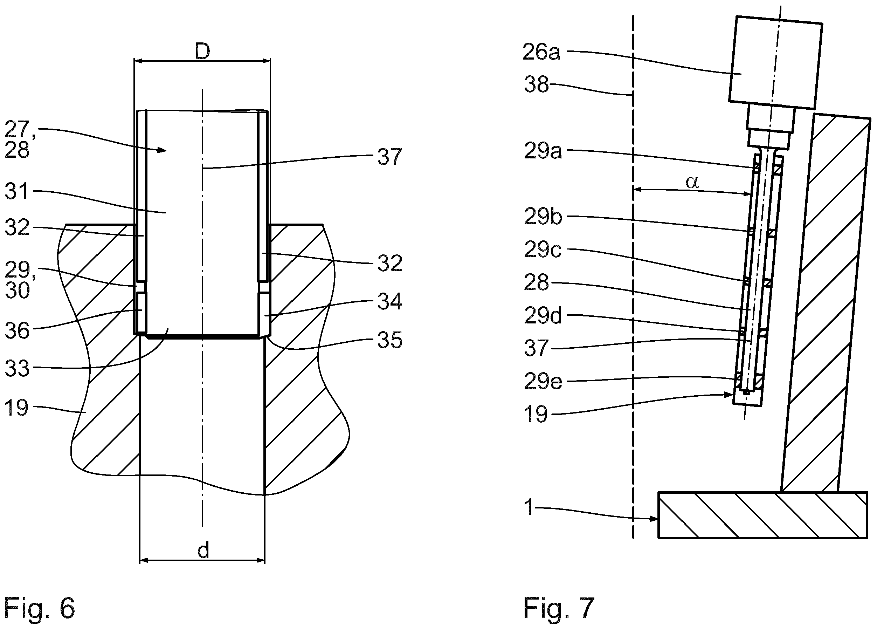

Wie im Wesentlichen Fig. 6 entnehmbar ist, bestehen die Werkzeuge 27, 28 im Wesentlichen aus einem zylindrischen Schaft 31, der an seinem Umfang mit über den Umfang verteilten achsparallelen Führungsleisten 32 versehen ist. An seinem vorderen, beim Einsatz unteren Ende ist das jeweilige Werkzeug 27 bzw. 28 als Reibkopf 33 ausgebildet, der ein Schneidelement 34 mit einer stirnseitigen Schneide 35 aufweist. Für das Verhältnis des Durchmessers D der Lagerbohrungen 29a bis 29e beziehungsweise 30a bis 30e nach deren Fertigstellung zu dem Durchmesser d vor der Fertigbearbeitung gilt: 0,4 mm <= D - d <= 0,6 mm und bevorzugt D - d = 0,5 mm. Die Dicke der beim Reiben abgetragenen Späne liegt also im Bereich zwischen 0,2 und 0,3 mm.

Dem Schneidelement 34 sind am Schaft 31 ebenfalls kurze Führungsleisten 36 zugeordnet. Der Durchmesser der Werkzeuge 27, 28 bezogen auf einander diametral gegenüberliegende Führungsleisten 32 ist 4 bis 8 µm kleiner als der Durchmesser D der durch Aufreiben zu erzeugenden Lagerbohrungen 29a bis 29e. Die Führungsleisten 32 haben also ein Spiel von 2 bis 4 µm gegen die Lagerbohrungen 29a bis 29e beziehungsweise 30a bis 30e nach deren Fertig-Bearbeitung.

Abweichend von der Darstellung in den Fig. 4 und 5 ist die WerkzeugAchse 37 bei der Ausgestaltung nach Fig. 7 um wenige Grad gegenüber der Vertikalen 38 geneigt. Dieser Neigungswinkel α gegenüber der Vertikalen 38 liegt im Bereich von 5 bis 10°. Entsprechend geneigt sind naturgemäß auch das zu bearbeitende Werkstück 19 und der z-Schlitten 11 mit Bearbeitungskopf 13 und Werkzeug-Antrieb 15 und der Werkzeug-Revolver 14 mit der Antriebs-Welle 23 angeordnet. Der Zweck der Neigung der Werkzeug-Achse 37 gegenüber der Vertikalen liegt in einem optimalen Kompromiss zwischen weitgehender Vermeidung des Durchhangs eines waagerecht eingesetzten Werkzeugs und der Vermeidung von Verkratzen der fertig bearbeiteten Lagerbohrungen durch die Schneide 35.

## Patentansprüche

1. Verfahren zur Fertigbearbeitung von mehreren koaxial hintereinander angeordneten und voneinander beabstandeten Lagerbohrungen (29a - 29e, 30a - 30e) in einem Werkstück (19) mittels jeweils einer in einer Werkzeugmaschine drehantreibbar eingespannten ersten und zweiten Reibahle auf gleichen End-Durchmesser D der Lagerbohrungen (29a - 29e, 30a - 30e),
**dadurch gekennzeichnet,**
**dass** mittels der in einen Werkzeug-Revolver (14) ständig eingespannten ersten Reibahle (27) mindestens eine erste, dem WerkzeugRevolver (14) benachbarte Lagerbohrung (29a, 29b; 30a, 30b) auf den End-Durchmesser D aufgerieben wird,
**dass** anschließend mit der gegenüber der ersten Reibahle (27) längeren, ebenfalls ständig in dem Werkzeug-Revolver (14) eingespannten zweiten Reibahle (28) die mindestens eine weitere Lagerbohrung (29c - 29e, 30c - 30e) auf den End-Durchmesser D aufgerieben wird, wobei die zweite Reibahle (28) in der mindestens einen bereits auf End-Durchmesser D aufgeriebenen Lagerbohrung (29a, 29b, 30a, 30b) zusätzlich zur Lagerung im Werkzeug-Revolver (14) radial gelagert ist und
**dass** die erste und die zweite Reibahle (27, 28) während der Fertigbearbeitung hängend eingesetzt werden.

2. Verfahren nach Anspruch 1, **dadurch gekennzeichnet,**
**dass** die erste und die zweite Reibahle (27, 28) während der Fertigbearbeitung der Lagerbohrungen (29a - 29e, 30a - 30e) vertikal hängend eingesetzt werden.

3. Verfahren nach Anspruch 1, **dadurch gekennzeichnet,**
**dass** die Reibahlen (27, 28) während der Fertigbearbeitung der Lagerbohrungen (29a - 29e, 30a - 30e) gegenüber der Vertikalen (38) um 5 bis 10° geneigt eingesetzt werden.

4. Verfahren nach einem der Ansprüche 1 bis 3, **dadurch gekennzeichnet,**
**dass** die verwendeten Reibahlen (27, 28) jeweils aus einem zylindrischen Schaft (31) bestehen, der an seinem Umfang mit über den Umfang verteilten achsparallelen Führungsleisten (32) versehen ist.

5. Verfahren nach einem der Ansprüche 1 bis 4, **dadurch gekennzeichnet,**
**dass** die verwendeten Reibahlen (27, 28) jeweils an ihrem vorderen Ende als Reibkopf (33) ausgebildet sind, der ein Schneidelement (34) mit einer stirnseitigen Schneide (35) aufweist.

6. Verfahren nach einem der Ansprüche 1 bis 5, **dadurch gekennzeichnet,**
**dass** die Lagerbohrungen (29a bis 29e, 30a bis 30e) auf einen Durchmesser D aufgerieben werden, wobei nach deren Fertigstellung für das Verhältnis des Durchmessers D zu dem Durchmesser d vor der Fertigbearbeitung gilt: 0,4 mm <= D - d <= 0,6 mm.

7. Verfahren nach Anspruch 6, **dadurch gekennzeichnet,**
**dass** der Durchmesser der verwendeten Reibahlen (27, 28) bezogen auf einander diametral gegenüberliegende Führungsleisten (32) 4 bis 8 µm kleiner ist als der Durchmesser D der durch Aufreiben zu erzeugenden Lagerbohrungen (29a bis 29e; 30a bis 30e).

## Claims

1. Method for finishing several bearing bores (29a - 29e, 30a to 30e) arranged coaxially one after the other and spaced from one another in a workpiece (19), by means of a first and a second reamer, respectively, clamped in a rotatably drivable manner in a machine tool, to an equal final diameter D of the bearing bores (29a - 29e, 30a to 30e),
**characterized in**
**that** by means of the first reamer (27), permanently clamped in a tool turret (14), at least one first bearing bore (29a, 29b; 30a, 30b) adjacent to the tool turret (14) is reamed to the final diameter D,
**that** subsequently, by means of the second reamer (28), also permanently clamped in the tool turret (14) and longer compared to the first reamer (27), the at least one further bearing bore (29c - 29e, 30c to 30e) is reamed to the final diameter D, wherein the second reamer (28), in addition to being mounted in the tool turret (14), is radially mounted in the at least one bearing bore (29a, 29b, 30a, 30b) already reamed to the final diameter D, and
**that** the first and the second reamer (27, 28) are applied in a suspended manner during finishing.

2. Method according to claim 1, **characterized in**
**that** the first and the second reamer (27, 28) are applied in a vertically suspended manner during the finishing of the bearing bores (29a to 29e, 30a to 30e).

3. Method according to claim 1, **characterized in**
**that** the reamers (27, 28) are applied in an inclined manner by 5 to 10° against der vertical (38) during the finishing of the bearing bores (29a to 29e, 30a to 30e).

4. Method according to one of the claims 1 to 3, **characterized in**
**that** the reamers (27, 28) used consist of a cylindric shaft (31), respectively, whose circumference is provided with axially parallel guiding rails (32) distributed across the circumference.

5. Method according to one of the claims 1 to 4, **characterized in**
**that** the reamers (27, 28) used, at their front end, respectively, are configured as reaming heads (33) showing a cutting element (34) with a cutting edge (35) on the face.

6. Method according to one of the claims 1 to 5, **characterized in**
**that** the bearing bores (29a to 29e, 30a to 30e) are reamed to a diameter D, wherein after finishing of these, the ratio of the diameter D against the diameter d before finishing is: 0.4 mm <= D - d <= 0.6 mm.

7. Method according to claim 6, **characterized in**
**that** the diameter of the reamers (27, 28) used, with regard to diametrically opposite guiding rails (32), is 4 to 8 µm smaller than the diameter D of the bearing bores (29a to 29e; 30a to 30e) to be produced by reaming.

## Revendications

1. Procédé pour la finition d'une pluralité d'alésages de paliers (29a à 29e, 30a à 30e), disposés l'un après l'autre de manière coaxiale et espacés l'un de l'autre dans une pièce de fabrication (19), par le biais d'un premier et un deuxième alésoir, chacun, étant serré de manière susceptible à être entraîné en rotation dans une machine-outil, au même diamètre final D des alésages de paliers (29a à 29e, 30a à 30e),
**caractérisé en ce**
**que,** par le biais du premier alésoir (27), étant serré sans cesse dans une tourelle (14), au moins un premier alésage de paliers (29a, 29b; 30a, 30b) avoisinant la tourelle (14) est alésé au diamètre final D,
**qu'**ensuite, par le deuxième alésoir (28), étant également serré dans la tourelle (14) et étant plus long comparé au premier alésoir (27), l'au moins un autre alésage de paliers (29c - 29e, 30c - 30e) est alésé au diamètre final D, le deuxième alésoir (28), en plus d'être monté dans la tourelle (14), étant monté radialement dans l'au moins un alésage de paliers (29a, 29b, 30a, 30b), déjà alésé au diamètre final D, et
**que** le premier et le deuxième alésoir (27, 28) sont utilisés de manière suspendue pendant la finition.

2. Procédé selon la revendication 1, **caractérisé en ce**
**que** le premier et le deuxième alésoir (27, 28) sont utilisés de manière verticalement suspendue pendant la finition des alésages de paliers (29a à 29e, 30a à 30e).

3. Procédé selon la revendication 1, **caractérisé en ce**
**que** les alésoirs (27, 28) sont utilisés de manière inclinée de 5 à 10° par rapport à la verticale (38) pendant la finition des alésages de paliers (29a à 29e, 30a à 30e).

4. Procédé selon l'une quelconque des revendications 1 à 3, **caractérisé en ce**
**que** les alésoirs (27, 28) utilisés se composent, chacun, d'une tige cylindrique (31), sur sa périphérie étant munie de rails de guidage (32) parallèles à l'axe repartis sur la périphérie.

5. Procédé selon l'une quelconque des revendications 1 à 4, **caractérisé en ce**
**que** les alésoirs (27, 28) utilisés, sur leur extrémité avant, sont configurés, chacun, comme tête d'alésage (33) présentant un élément de coupe (34) avec un tranchant (35) sur sa façade.

6. Procédé selon l'une quelconque des revendications 1 à 5, **caractérisé en ce**
**que** les alésages de paliers (29a à 29e, 30a à 30e) sont alésés à un diamètre D, après la finition de ceux-ci le rapport entre le diamètre D et le diamètre d avant la finition étant : 0,4 mm <= D - d <= 0,6 mm.

7. Procédé selon la revendication 6, **caractérisé en ce**
**que** le diamètre des alésoirs (27, 28) utilisés, par rapport à des rails de guidage (32) situés de manière diamétralement opposée, est 4 à 8 µm plus petit que le diamètre D des alésages de paliers (29a à 29e; 30a à 30e) à produire par alésage.
